# EUROPEAN PATENT APPLICATION

(11) **EP 4 492 221 A1**
(43) Date of publication of application: **15.01.2025**
(21) Application number: 24187305.8
(22) Date of filing: 09.07.2024
(51) Int. Cl.: G06F 8/34, G06F 9/451

(54) **METHOD AND SYSTEM FOR CREATING RPA SCENARIO**

(30) Priority: 10.07.2023 KR 20230088981; 17.10.2023 KR 20230138183
(71) Applicant: Samsung SDS Co., Ltd., Seoul 05510 (KR)
(72) Inventor: Park, Keun Taek, 05510 SEOUL (KR); Kim, Hyo Young, 05510 SEOUL (KR)
(74) Representative: Glawe, Delfs, Moll

(57) **Abstract**

A method of creating a Robotic Process Automation (RPA) scenario is provided. The method may include: receiving input from a user that designates a target application or an RPA object within the target application, identifying and displaying one or more RPA objects that belong to the target application, receiving input from the user that selects a target RPA object and a user activity associated with the target RPA object, and transforming the selected user activity into a corresponding RPA activity sequence and displaying the corresponding RPA activity sequence.

## Description

### BACKGROUND

### 1. Field

The present disclosure relates to a method and system for creating a Robotic Process Automation (RPA) scenario.

### 2. Description of the Related Art

Robotic Process Automation (RPA) utilizes software robots (i.e., RPA bots) to automate repetitive tasks that are traditionally performed by humans. Recently, in pursuit of enhanced operational efficiency, a growing number of companies are now adopting RPA.

To automate tasks through RPA, it is necessary to write an RPA scenario (i.e., a sequence of activities to be performed by RPA bots). Currently, various RPA tools (or solutions) are available that support the creation of RPA scenarios. For example, some RPA tools provide a Graphical User Interface (GUI) that helps users easily create RPA scenarios through features such as selecting RPA objects, and arranging and connecting RPA activities.

However, creating RPA scenarios remains a challenge for most users (e.g., business operators who are not familiar with RPA) even with such RPA tools. For example, many users fail to create RPA scenarios for RPA objects that are not visible on the screen (e.g., objects obscured by other RPA objects). Moreover, depending on the characteristics of each application, implementing certain user activities (e.g., clicking on an RPA object) often requires the integration of multiple RPA activities, such as text recognition through Optical Character Recognition (OCR) and coordinate-based clicking, to implement a click on a text object. This poses significant challenges for users who may struggle to locate and effectively combine appropriate RPA activities.

### SUMMARY

Aspects of the present disclosure provide a method and a system that can reduce the difficulty of creating (or writing) a Robotic Process Automation (RPA) scenario.

Aspects of the present disclosure also provide a method and a system that can enhance the convenience for a user who creates (or writes) an RPA scenario.

Aspects of the present disclosure also provide a method and a system that support the rapid creation of a reliable and accurate RPA scenario.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to an aspect of the present disclosure, there is provided a method of creating a Robotic Process Automation (RPA) scenario, performed by at least one computing device. The method may include: receiving, from a user, an input for designating a target application or an RPA object within the target application, identifying and displaying one or more RPA objects that belong to the target application, receiving, from the user, an input for selecting a target RPA object and a user activity associated with the target RPA object, and transforming the selected user activity into a corresponding RPA activity sequence and displaying the corresponding RPA activity sequence.

In some embodiments, the identified one or more RPA objects may include one or more RPA objects that are not visible in a screen area of the target application.

In some embodiments, identifying and displaying the one or more RPA objects, may include: if an RPA object within the target application is designated, identifying the one or more RPA objects by searching for a parent object of the designated RPA object through an Operating System (OS) Application Programming Interface (API), and displaying the identified one or more RPA objects in a tree view.

In some embodiments, identifying and displaying the one or more RPA objects, may include: receiving input from the user that designates an object identification method, if the designated object identification method is a first method, identifying the RPA objects that belong to the target application according to the first method; and if the designated object identification method is a second method, identifying the RPA objects that belong to the target application according to the second method, and at least some of RPA object identification results according to the first method differ from RPA object identification results according to the second method.

In some embodiments, identifying and displaying the one or more RPA objects, may include identifying a hierarchical structure of the one or more RPA objects, and generating an identifier (ID) for each of the one or more RPA objects based on the hierarchical structure.

In some embodiments, identifying and displaying the one or more RPA objects, may include: generating a screenshot image of the target application, and displaying the one or more RPA objects in a first area of an RPA object interface and displaying the screenshot image in a second area of the RPA object interface.

In some embodiments, the method may further include: receiving input from the user that selects a particular RPA object in the first area, determining an object area in the screenshot image where the particular RPA object is located, based on a bounds attribute of the particular RPA object, and highlighting the determined object area in the screenshot image displayed in the second area.

In some embodiments, the method may further include: receiving input from the user that selects a particular point within the screenshot image displayed in the second area, creating a list of RPA objects whose object areas includes a location of the particular point, based on attribute information of the one or more RPA objects, determining an RPA object with a smallest object area from the list of RPA objects, and highlighting the determined RPA object in the first area.

In some embodiments, the one or more RPA obj ects may be identified according to an object identification method designated by the user, and the transforming the selected user activity into the corresponding RPA activity sequence and displaying the corresponding RPA activity sequence may include: determining whether a transformation of the selected user activity into an RPA activity sequence is necessary based on the designated object identification method, and transforming the selected user activity into the corresponding RPA activity sequence when the transformation of the selected user activity into an RPA activity sequence is determined to be necessary.

In some embodiments, the one or more RPA obj ects may be identified according to an object identification method designated by the user, and the transforming the selected user activity into the corresponding RPA activity sequence and displaying the corresponding RPA activity sequence, may include: searching for and acquiring an RPA activity sequence that matches the designated object identification method from multiple RPA activity sequences corresponding to the selected user activity, wherein the multiple RPA activity sequences are predefined for different object identification methods, and transforming the selected user activity into the acquired RPA activity sequence.

In some embodiments, wherein the transforming the selected user activity into the corresponding RPA activity sequence and displaying the corresponding RPA activity sequence, may include: automatically setting attribute information of RPA activities constituting the RPA activity sequence using attribute information of the target RPA object, collected during the identification of the one or more RPA objects.

According to another aspect of the present disclosure, there is a provided apparatus for creating a Robotic Process Automation (RPA) scenario. The apparatus may include: at least one processor, and a memory storing a computer program executed by the at least one processor, wherein the computer program includes instructions for operations of: receiving input from a user that designates a target application or an RPA object within the target application, identifying and displaying one or more RPA objects that belong to the target application, receiving input from the user that selects a target RPA object and a user activity associated with the target RPA object, and transforming the selected user activity into a corresponding RPA activity sequence and displaying the corresponding RPA activity sequence.

In some embodiments, the identified one or more RPA objects may include one or more RPA objects that are not visible in a screen area of the target application.

In some embodiments, identifying and displaying the one or more RPA objects, may include: if an RPA object within the target application is designated, identifying the one or more RPA objects by searching for a parent object of the designated RPA object through an Operating System (OS) Application Programming Interface (API), and displaying the identified one or more RPA objects in a tree view.

In some embodiments, the identifying and displaying the one or more RPA objects, may include: receiving input from the user that designates an object identification method, if the designated object identification method is a first method, identifying the RPA objects that belong to the target application according to the first method, and if the designated object identification method is a second method, identifying the RPA objects that belong to the target application according to the second method, and at least some of RPA object identification results according to the first method differ from RPA object identification results according to the second method.

In some embodiments, identifying and displaying the one or more RPA objects, may include: identifying a hierarchical structure of the one or more RPA objects, and generating an identifier (ID) for each of the one or more RPA objects based on the hierarchical structure.

In some embodiments, identifying and displaying the one or more RPA objects, may include: generating a screenshot image of the target application, and displaying the one or more RPA objects in a first area of an RPA object interface and displaying the screenshot image in a second area of the RPA object interface.

In some embodiments, the computer program may further include instructions for operations of: receiving input from the user that selects a particular RPA object in the first area, determining an object area in the screenshot image where the particular RPA object is located, based on a bounds attribute of the particular RPA object, and highlighting the determined object area in the screenshot image displayed in the second area.

In some embodiments, the computer program may further include instructions for operations of: receiving input from the user that selects a particular point within the screenshot image displayed in the second area, creating a list of RPA objects whose object areas includes a location of the particular point, based on attribute information of the one or more RPA objects, determining an RPA object with a smallest object area from the list of RPA objects, and highlighting the determined RPA object in the first area.

According to another aspect of the present disclosure, there is a provided computer program stored on a non-transitory a computer-readable medium storing a computer program executable by at least one processor to execute: receiving, from a user, an input for designating a target application or an RPA object within the target application, identifying and displaying one or more RPA objects that belong to the target application, receiving, from the user, an input for selecting a target RPA object and a user activity associated with the target RPA object, and transforming the selected user activity into a corresponding RPA activity sequence and displaying the corresponding RPA activity sequence.

According to some embodiments of the present disclosure, RPA objects within a target application can be automatically identified, and a user activity (or event) selected by a user can be automatically transformed into an RPA activity sequence. Consequently, the complexity of creating (or writing) an RPA scenario can be significantly reduced, and user convenience in creating an RPA scenario can be greatly enhanced (e.g., the difficulty and hassle of manually finding and combining RPA activities can be eliminated). Furthermore, a reliable and accurate RPA scenario can be quickly and easily generated.

Additionally, by searching for the parent object of a designated RPA object through an OS API, all the RPA objects within the target application and their hierarchical structure can be easily identified. Moreover, even RPA objects (i.e., invisible RPA objects) that are not visible in the screen area of the target application can be accurately identified.

Furthermore, the identified one or more RPA objects within the target application can be displayed in the first area of an RPA object interface, and a screenshot image of the target application can be displayed in the second area of the RPA object interface. When an RPA object from a particular area is selected, a corresponding RPA object (or object area) from another area can be highlighted. In this case, the user can select an invisible RPA object via the first area and quickly select a visible RPA object (e.g., a target RPA object) via the second area, thus further enhancing user convenience.

Additionally, attribute information for the RPA activities that constitute the RPA activity sequence can be automatically set based on the attribute information of the target RPA object, a default value, etc. Accordingly, the difficulty of creating an RPA scenario can be further reduced, and user convenience in creating an RPA scenario can be further enhanced.

It should be noted that the effects of the present disclosure are not limited to those described above, and other effects of the present disclosure will be apparent from the following description.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a schematic view illustrating a Robotic Process Automation (RPA) scenario creation system according to some embodiments of the present disclosure;
FIG. 2 is a block diagram illustrating the RPA system 10 according to some embodiments of the present disclosure;
FIG. 3 is a flowchart illustrating an RPA scenario creation method according to some embodiments of the present disclosure;
FIG. 4 is a detailed flowchart illustrating the step of identifying RPA objects, i.e., step S32 of FIG. 3;
FIGS. 5 and 6 illustrate how to identify RPA objects that belong to a target application through an operating system (OS) according to some embodiments of the present disclosure;
FIG. 7 illustrates an RPA object interface according to some embodiments of the present disclosure;
FIG. 8 illustrates the RPA object selection and highlighting features of the RPA object interface according to some embodiments of the present disclosure;
FIGS. 9 and 10 are flowcharts illustrating how to determine a target RPA object (or object area) to be highlighted according to some embodiments of the present disclosure;
FIG. 11 is a detailed flowchart illustrating step S34 of FIG. 3;
FIGS. 12 and 13 further illustrate step S34 of FIG. 3; and
FIG. 14 illustrates an exemplary computing device that can implement the RPA scenario creation system according to some embodiments of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that may be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), may be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Embodiments of the present disclosure will be described with reference to the attached drawings.

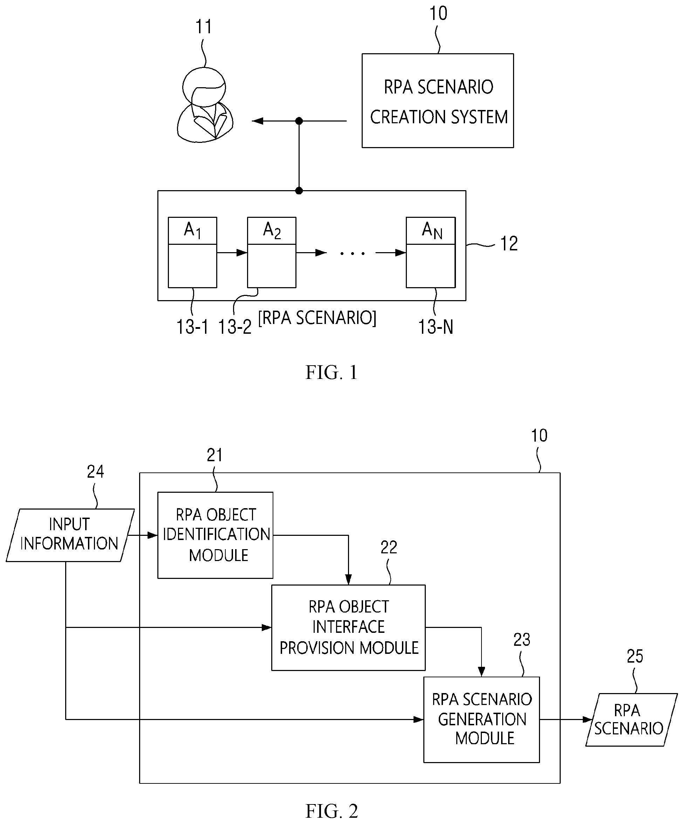

FIG. 1 is a schematic view illustrating a Robotic Process Automation (RPA) scenario creation system 10 according to some embodiments of the present disclosure.

Referring to FIG. 1, the RPA scenario creation system 10 is a computing device/system that supports the creation of an RPA scenario 12. The RPA scenario creation system 10 may refer to a client-side device that creates the RPA scenario 12 through interaction with a user 11, or may encompass both the client-side device and a server-side device/system that supports at least part of an RPA scenario creation function. The client-side device may be, for example, equipped with an RPA scenario creation tool or may provide an RPA scenario creation function tool to the user 11 via a web browser, but the present disclosure is not limited thereto. Each of the client-side device and the server-side device may be referred to as an "RPA scenario creation device" depending on the context. For ease of explanation, the RPA scenario creation system 10 will hereinafter be abbreviated as the RPA system 10.

The RPA scenario 12 means a sequence of RPA activities 13-1 through 13-N. The RPA scenario 12 may be configured to include one or more RPA activities (e.g., "13-1"). Once the RPA scenario 12 is complete, a software robot i.e., an RPA bot, may automate the user 11's repetitive tasks by sequentially executing the RPA activities (e.g., "13-1") defined in the RPA scenario 12 (e.g., by running automation scripts for the RPA activities). Depending on the context, an activity or scenario may also be referred to as a task.

The RPA system 10 may provide various functionalities that may reduce the difficulty of creating the RPA scenario 12 and enhance user convenience. For example, the RPA system 10 may offer various functionalities such as RPA object identification, RPA object interface provision, and RPA activity sequence transformation, which will be discussed later in detail with reference to FIG. 2 and subsequent figures.

The RPA system 10 may be implemented as at least one computing device. For example, all functions of the RPA system 10 may be implemented in one computing device, or first and second functions of the RPA system 10 may be implemented in first and second computing devices, respectively. Alternatively, a specific function of the RPA system 10 may be implemented across multiple computing devices.

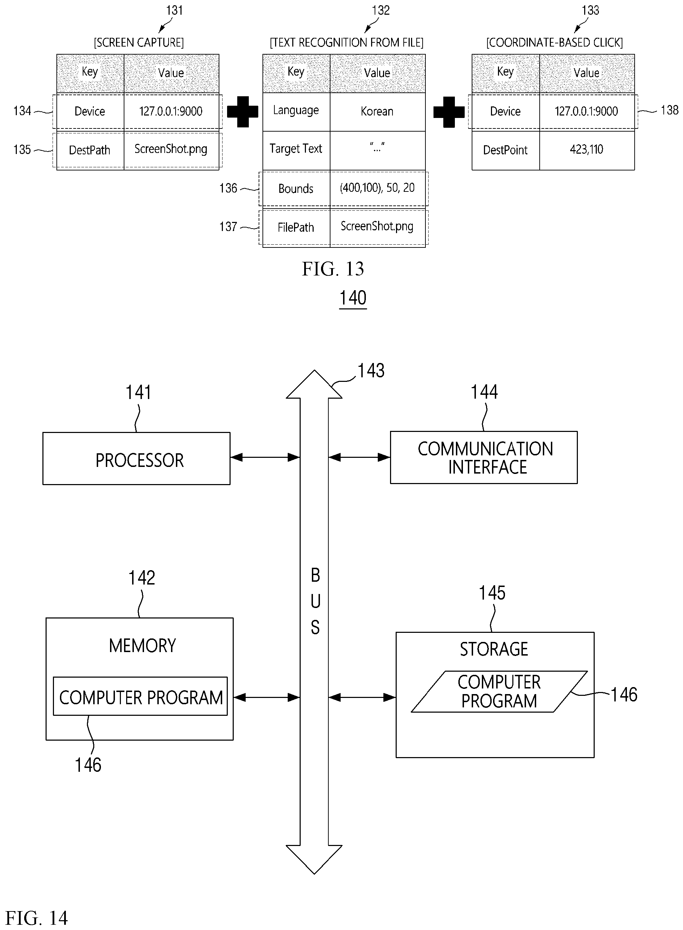

The term "computing device" may encompass any type of device equipped with computing functionalities, and an exemplary computing device will be described later with reference to FIG. 14. As a computing device is an assembly where various components (e.g., memories, processors, etc.) interact, it may sometimes be referred to as a computing system, which may also encompass the concept of an assembly where multiple computing devices interact.

The operation of the RPA system 10 has been described so far with reference to FIG. 1. The configuration and operation of the RPA system 10 will hereinafter be described with reference to FIG. 2.

FIG. 2 is a block diagram illustrating the RPA system 10 according to some embodiments of the present disclosure.

Referring to FIG. 2, the RPA system 10 may include an RPA object identification module 21, an RPA object interface provision module 22, and an RPA scenario creation module 23. While FIG. 2 depicts only components relevant to the disclosed embodiments, it is apparent to those skilled in the art to which the present disclosure pertains that other generic components, such as processors, displays, and other input/output devices, may also be included in the RPA system 10. Moreover, the components of the RPA system 10, i.e., the RPA object identification module 21, the RPA object interface provision module 22, and the RPA scenario creation module 23, denote functionally distinct components which, in physical implementation, may be integrated together or may be divided into multiple subcomponents. Additionally, the term "module" may be used interchangeably with other terms such as "unit," "element," "portion," "part," "device," etc. The components of the RPA system 10 will hereinafter be described.

The RPA object identification module 21 is a module that identifies RPA objects (hereinafter referred to as "the objects") included in a target application. For example, the RPA object identification module 21 may receive input 24 from the user 11 that designates a target application on a screen (e.g., the screen of a target device where the RPA bot is to be executed) or an RPA object within the target application. Then, in response to the received input 24, the RPA object identification module 21 may identify one or more RPA objects included in the target application. Specifically, assuming that the user 11 is creating (or writing) an RPA scenario related to a web browser (or Excel), if the user 11 designates a particular RPA object within the web browser or Excel, the RPA object identification module 21 may identify all associated RPA objects of the web browser or Excel. The RPA object identification module 21 may provide an interface to the user 11 for designating the target application or an RPA object, which may be implemented in any manner.

Here, the screen displaying the target application may mean the screen of the target device where the RPA bot is executed. That is, if the target device is the RPA system 10, then the screen may be the display screen of the RPA system 10, i.e., the screen output through a display, and if the target device is an external device connected through a network to the RPA system 10, then the screen may be the display screen of the external device. Additionally, an RPA object may mean any object to which RPA activities are applicable, and an application may also be considered an RPA object.

In some embodiments, an object identification method may be designated (or selected/set) by the user 11, and the RPA object identification module 21 may identify the RPA objects belonging to the target application according to the designated object identification method. In other words, in response to receiving input from the user 11 that designates (or selects/sets) an object identification method, the RPA object identification module 21 may identify the RPA objects belonging to the target application using the designated object identification method. The results of object identification may vary for the same target application depending on the object identification method used. Specific methods for identifying objects (e.g., through the Windows operating system or through image analysis such as Optical Character Recognition (OCR)) may be predefined.

Various object identification methods may be predefined, considering the types of operating systems, applications, devices, etc. For example, a first object identification method suitable for a Windows application (e.g., identifying objects through the Windows operating system), a second object identification method suitable to a native application such as a Microsoft Foundation Class Library (MFC)-based application, and a third object identification method applicable to an Android mobile device may be predefined. Additionally, a fourth object identification method based on OCR may also be predefined. However, the present disclosure is not limited to these object identification methods. The first through fourth object identification methods will continue to be used in the same sense as mentioned above.

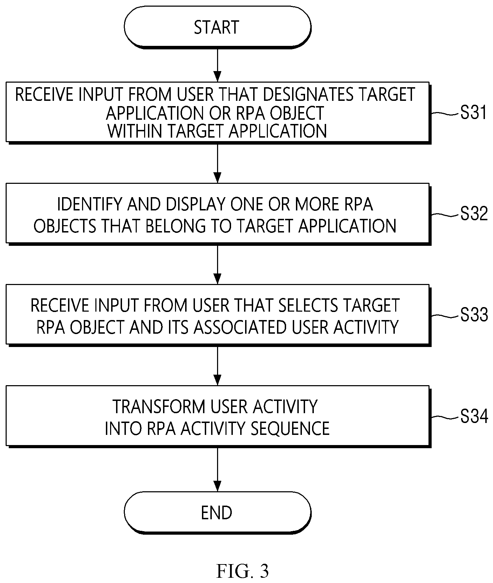

The functionalities and operations of the RPA object identification module 21 will hereinafter be described with reference to FIG. 3 and subsequent figures.

The RPA object interface provision module 22 is a module that provides an interface for RPA objects identified by the RPA object identification module 21. The RPA object interface may be designed/configured in various forms. For example, the identified RPA objects may be displayed in a first area of the RPA object interface, a screenshot image of the target application may be displayed in a second area of the RPA object interface, and information (e.g., attribute information) of a selected RPA object may be displayed in a third area of the RPA object interface. Additionally, user activities (or RPA activities), i.e., candidate activities that are applicable to the selected RPA object, may be displayed in a fourth area of the RPA object interface. However, the present disclosure is not limited to these configurations.

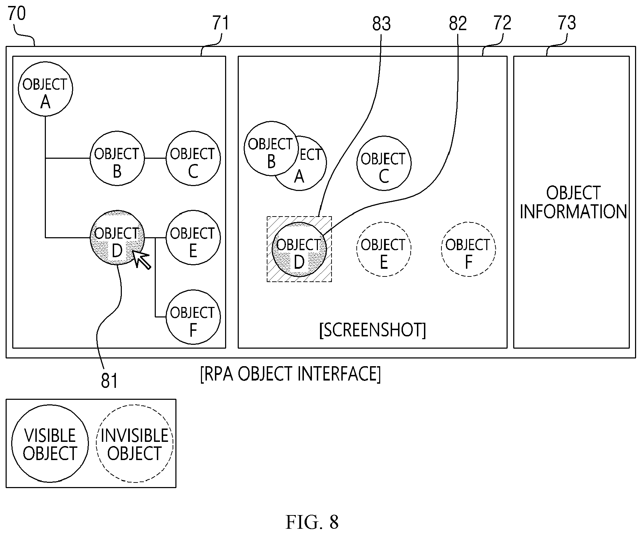

Furthermore, the RPA object interface provision module 22 may receive input 24 from the user 11 that selects an RPA object in a particular area (e.g., the first or second area), through the RPA object interface. Then, in response to the received input 24, the RPA object interface provision module 22 may highlight the corresponding RPA object in another area (or the region including the corresponding RPA object). This will be described later in detail with reference to FIGS. 8 through 10.

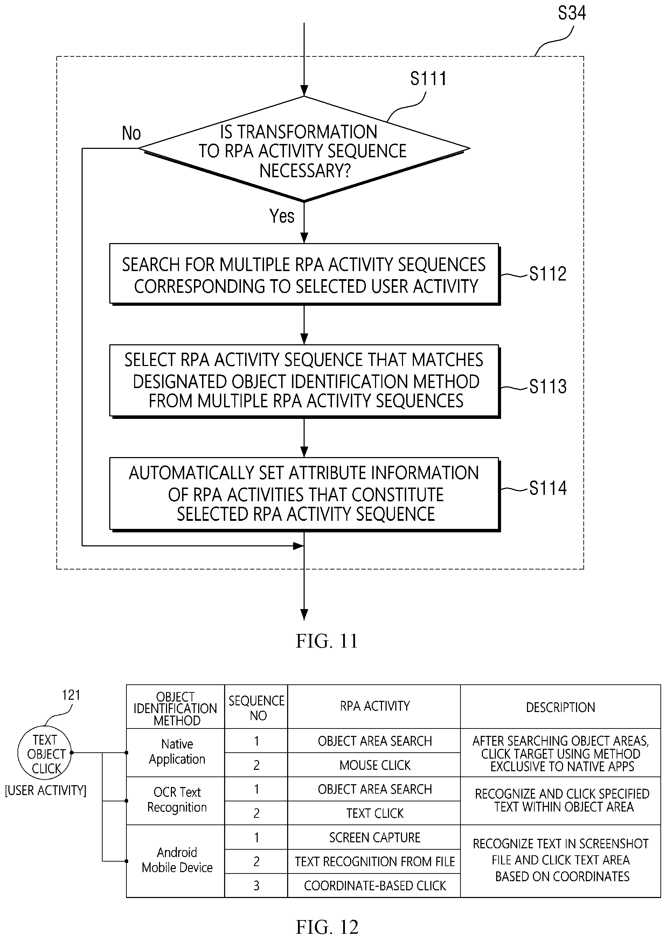

User activities refer to activities defined from the user 11's perspective, and RPA activities refer to activities defined from an RPA perspective (i.e., activities that form an RPA scenario). A single user activity may correspond to a single RPA activity (in which case, the user activity may be considered the same as the RPA activity), or may correspond to a sequence of multiple RPA activities. The correspondence between user activities and RPA activities may vary depending on the object identification method used, and this will be further discussed with reference to FIGS. 11 through 13. User activities may also be termed to as user events.

Further details on the functionalities and operations of the RPA object interface provision module 22 will be presented later with reference to FIG. 3 and subsequent figures.

The RPA scenario creation module 23 is a module that creates an RPA scenario 25 for the target application (or a target RPA object). For example, the RPA scenario creation module 23 may receive input 24 from the user 11 that selects a user activity. Then, in response to the received input 24, the RPA scenario creation module 23 may automatically convert the selected user activity into a corresponding RPA activity sequence. Furthermore, the RPA scenario creation module 23 may automatically set attribute information of RPA activities that form the RPA activity sequence. In this manner, the difficulty of creating the RPA scenario 25 can be reduced, and user convenience can be significantly enhanced. The RPA scenario creation module 23 may also provide the converted RPA activity sequence to the user 11 through an RPA scenario design interface (e.g., a GUI that supports the design of RPA scenarios by arranging and connecting RPA activities).

Further details on the functionalities and operations of the RPA scenario creation module 23 will be presented later with reference to FIG. 3 and subsequent figures.

The configuration and operations of the RPA system 10 have been described so far with reference to FIG. 2. Various methods (i.e., detailed operations) that can be performed within the RPA system 10 will hereinafter be described with reference to FIG. 3 and subsequent figures.

For ease of understanding, it is assumed that all steps/operations of the methods that will hereinafter be described are performed by the RPA system 10. If the subject of a specific step/operation is omitted, it may be understood that the specific step/operation is performed by the RPA system 10. However, in an actual environment, some steps/operations of the methods that will hereinafter be described may be performed by different computing devices.

FIG. 3 is a flowchart illustrating an RPA scenario creation method according to some embodiments of the present disclosure. However, the embodiment depicted in FIG. 3 is merely exemplary for achieving the purposes of the present disclosure, and some steps may be added or removed, as necessary.

Referring to FIG. 3, the RPA scenario creation method according to some embodiments of the present disclosure may begin with step S31, which involves receiving input from a user that designates a target application or an RPA object within the target application. For example, the RPA system 10 may provide an interface to the user for designating a target application or RPA object, and the user may designate the target application or an RPA object within the target application through this interface (e.g., by clicking an RPA object specification button displayed on the interface and then moving the cursor to the target application to designate an RPA object).

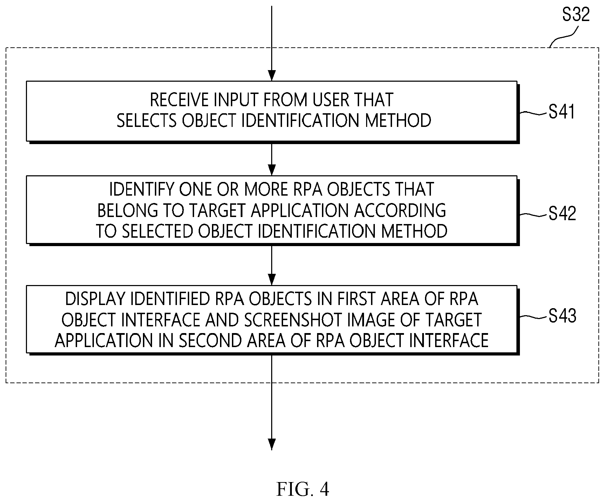

In step S32, one or more RPA objects belonging to the target application are identified, and the identification results may be displayed. Details on step S32 will be further explained with reference to FIG. 4.

FIG. 4 is a detailed flowchart illustrating step S32 of FIG. 3.

Referring to FIG. 4, in step S41, input may be received from the user that selects an object identification method. For example, the user may select a desired object identification method from among multiple object identification methods provided by the RPA system 10. The user may choose an appropriate object identification method, considering factors such as the type of the target application and the type of device on which the target application is installed (e.g., the user may select an object identification method that effectively identifies a target RPA object to which an RPA activity is to be applied). Step S41 may be performed before step S31 of FIG. 3.

In step S42, based on the chosen object identification method, one or more RPA objects belonging to the target application may be identified. For example, the RPA system 10 may identify the RPA objects of the target application and their relationships (e.g., hierarchical relationships) within the target application according to the chosen object identification method.

As previously mentioned, the results of object identification may vary for the same target application depending on the object identification method used. For example, at least some RPA object identification results obtained using the first object identification method may differ from those obtained using the second object identification method (or the third or fourth object identification method).

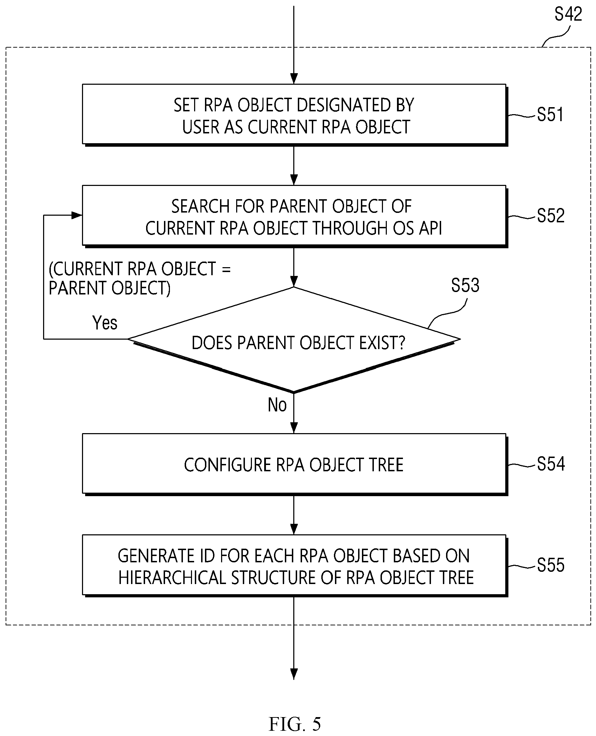

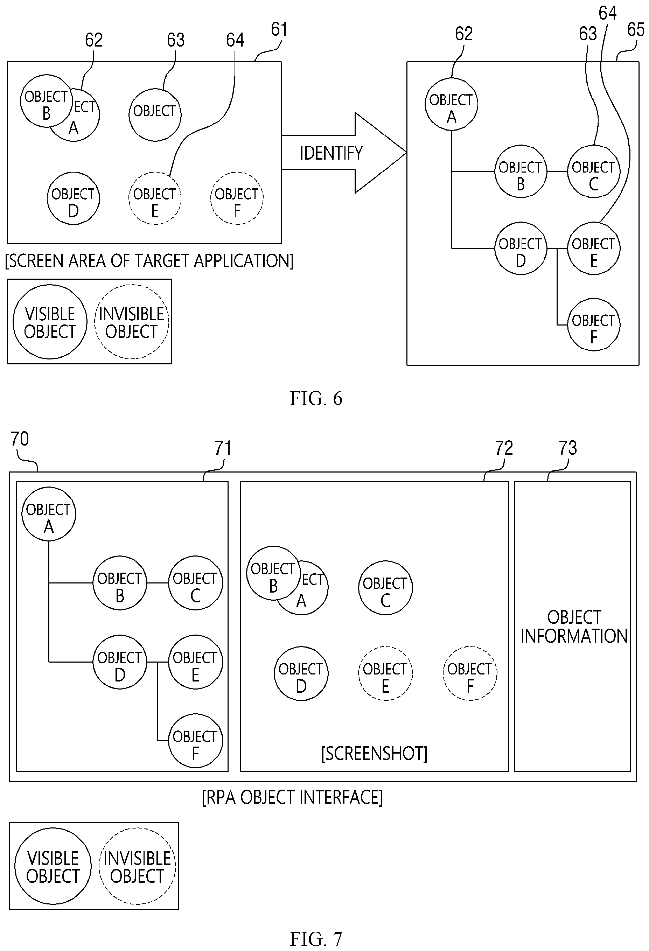

For convenience of understanding, the process of identifying the RPA objects within the target application according to the first object identification method will hereinafter be described with reference to FIGS. 5 and 6.

FIG. 5 is a flowchart illustrating the process of identifying RPA objects using the first object identification method. Specifically, FIG. 5 illustrates how to identify RPA objects through an operating system (OS) (e.g., the Windows OS), i.e., how to identify objects using object information managed by the operating system. Additionally, FIG. 5 assumes that the user has designated a particular RPA object within the target application in step S31.

Referring to FIG. 5, in step S51, the RPA object designated by the user may be set as a current RPA object.

In step S52, the parent object of the current RPA object may be searched for through the OS Application Programming Interface (API). For example, the RPA system 10 may search for and identify the parent object of the current RPA object using a Windows API that supports an object search function (e.g., an API that returns the handle of the parent object). Those skilled in the art may already be familiar with how an OS like Windows manages objects included in an application in a hierarchical structure and provides an API for navigating these objects, so further details will be omitted.

In step S53, the existence of the parent object of the current RPA object may be determined based on the results of an OS API call. If the parent object exists, the RPA system 10 may set the parent object as a new current RPA object and repeat step S52 (i.e., continue searching in the direction of the parent node). If no parent object exists (e.g., if the current RPA object is the target application itself), then step S54 may be performed.

In step S54, an RPA object tree may be constructed. Specifically, the RPA system 10 may identify the hierarchical structure/relationships of the RPA objects belonging to the target application through the search process performed in steps S52 and S53, and may construct an RPA object tree based on the results of the search process. For example, referring to FIG. 6, the RPA system 10 may identify multiple RPA objects (e.g., 62 through 64) belonging to the target application and their hierarchical relationships (refer to 65). The identified RPA objects may include both visible RPA objects (e.g., 63) and invisible RPA objects (e.g., 64).

The invisible RPA objects (e.g., 64) are objects that are not visible on a screen 61, such as objects obscured by other RPA objects (i.e., objects overlapped by other RPA objects), or objects with their visibility attribute (or property) set to "false," but the present disclosure is not limited thereto.

Referring again to FIG. 5, in step S55, an identifier (ID) may be generated for each of the identified RPA objects based on the hierarchical structure of the RPA object tree. For example, the RPA system 10 may assign a predefined ID (e.g., the name of the target application, process ID, object ID assigned by the OS, etc.) to an RPA object at the root of the RPA object tree and may generate IDs for the child objects of the corresponding RPA object based on the predefined ID (e.g., by appending information on the child objects, such as the names of the child objects or the IDs of the child objects assigned by the OS, to the ID of the parent object). By repeating these processes, the RPA system 10 may generate IDs that reflect the hierarchical structure of the respective identified RPA objects.

Additionally, during the identification of RPA objects, the RPA system 10 may also collect various attributes of RPA objects and information on the target device (e.g., network address). For example, the RPA system 10 may acquire various attributes of RPA objects using object information managed by the OS.

The process of identifying RPA objects within the target application according to the first object identification method has been described so far with reference to FIGS. 5 and 6. Subsequent steps following step S42 will hereinafter be described with reference to FIG. 4.

Referring back to FIG. 4, in step S43, the identified RPA objects (e.g., the RPA object tree) may be displayed in the first area of the RPA object interface, and a screenshot image of the target application may be displayed in the second area of the RPA object interface. For example, the RPA system 10 may display the identified RPA objects in a tree view format in the first area of the RPA object interface. Additionally, the RPA system 10 may generate a screenshot image of the target application and display the generated image in the second area of the RPA object interface. The RPA object interface may be provided to the user (i.e., via the display screen of the RPA system 10).

Meanwhile, in some embodiments, the RPA system 10 may offer a user-friendly selection feature for the target RPA object through the RPA object interface, and this will hereinafter be described with reference to FIGS. 7 through 10.

FIG. 7 illustrates an RPA object interface 70 according to some embodiments of the present disclosure.

Referring to FIG. 7, the RPA object tree may be displayed (e.g., in a tree view format) in a first area 71 of an RPA object interface 70, a screenshot image of the target application may be displayed in a second area 72 of the RPA object interface 70, and information on a selected RPA object may be displayed in a third area 73 of the RPA object interface 70. However, the present disclosure is not limited to this configuration. In some embodiments, a list of user activities (or RPA activities) applicable to the selected RPA object may also be displayed in a fourth area of the RPA object interface 70.

According to some embodiments, the RPA system 10 may provide an RPA object selection feature through both the first and second areas 71 and 72 of the RPA object interface 70. Additionally, the RPA system 10 may provide a highlighting feature for the selected RPA object. In this case, the user can quickly select, for example, as the target RPA object, an invisible or visible RPA object via the first or second area 71 or 72, and thus, user convenience can be considerably enhanced. This will hereinafter be described with reference to FIGS. 8 through 10.

FIG. 8 is a schematic illustrating the RPA object selection and highlighting features of the RPA object interface 70 according to some embodiments of the present disclosure.

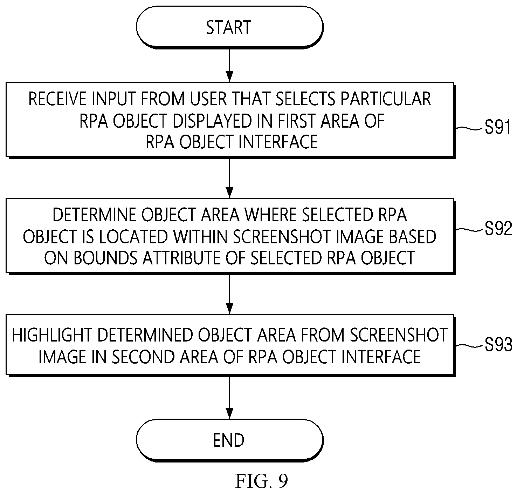

Referring to FIG. 8, if the user selects a particular RPA object 81 in the first area 71 of the RPA object interface 70, then the RPA system 10 may highlight an area (82 or 83) of the same or corresponding object in the screenshot image in the second area 72 of the RPA object interface 70. For example, the RPA system 10 may highlight an RPA object area 82 or a rectangular object area 83 that includes the RPA object area 82. This highlighting feature may be performed in any manner as long as it visually distinguishes (or emphasizes) a target object or object area (e.g., 83) to be highlighted. This highlighting method will be described later with reference to FIG. 9.

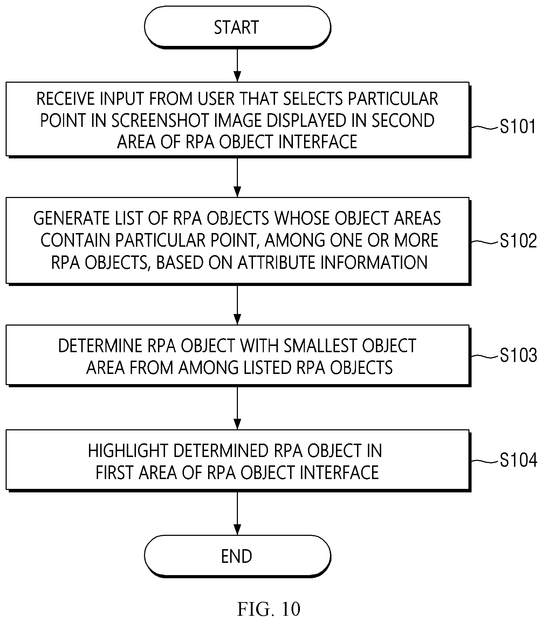

Similarly, if the user selects a particular point or a particular RPA object (e.g., 82) in the screenshot image in the second area 72 of the RPA object interface 70, then the RPA system 10 may highlight an RPA object (e.g., 81) corresponding to the particular point or RPA object in the first area 71 of the RPA object interface 70. This highlighting method will be described later with reference to FIG. 10.

FIG. 9 is a flowchart illustrating how to determine a target RPA object (or RPA object area) to be highlighted in the second area 72 of the RPA object interface 70 according to some embodiments of the present disclosure.

Referring to FIG. 9, when input selecting a particular RPA object in the first area 71 of the RPA object interface 70 is received, the RPA system 10 may determine an object area for the selected RPA object in the screenshot image based on the bounds attribute of the selected RPA object (S91 and S92). The bounds attribute typically includes the coordinates (i.e., x and y coordinates) and size (i.e., width and height) of the selected RPA object. The bounds attribute is already well known to those skilled in the art, and thus, detailed descriptions thereof will be omitted. For example, the RPA system 10 may determine a rectangular area (e.g., 83) within the screenshot image that is indicated by the bounds attribute of the selected RPA object, as the object area for the selected RPA object.

Thereafter, the RPA system 10 may highlight the determined object area in the screenshot image displayed in the second area 72 of the RPA object interface 70 (S93). The highlighting of the determined object area may be performed in any manner that can visually distinguish the determined object area.

A method of determining a target RPA object (or RPA object area) in the first area 71 of the RPA object interface 70 will hereinafter be described with reference to FIG. 10.

FIG. 10 is a flowchart illustrating how to determine a target RPA object (or RPA object area) in the first area 71 of the RPA object interface 70 according to some embodiments of the present disclosure.

Referring to FIG. 10, in response to receiving input (e.g., a click) that selects a particular point (e.g., a particular RPA object) in the screenshot image displayed in the second area 72 of the RPA object interface 70, the RPA system 10 may generate a list of RPA objects that have object areas containing the selected point (S101 and S102). The RPA system 10 may determine which of the RPA objects identified from the target application have object areas that contain the selected point, using bounds attribute information of the corresponding RPA objects (i.e., the objects displayed in the first area 71).

Thereafter, the RPA system 10 may determine an RPA object with a smallest object area from the generated list of RPA objects as a target RPA object (S103). For example, the RPA system 10 may compare the object areas of the RPA objects included in the generated list and select the RPA object with the smallest object area.

Thereafter, the RPA system 10 may highlight the determined target RPA object in the first area 71 of the RPA object interface 70 (S104). For example, the RPA system 10 may highlight the determined target RPA object in the RPA object tree displayed in the first area 71 of the RPA object interface 70.

Embodiments associated with the RPA object interface 70 have been described so far with reference to FIGS. 7 through 10.

The steps subsequent to step S32 will hereinafter be described with reference to FIG. 3. Referring back to FIG. 3, in step S33, input that selects a target RPA object and an associated user activity may be received from the user. Here, the target RPA object refers to an RPA object to which an RPA scenario is to be applied. For example, in response to receipt of input that selects the target RPA object from among one or more RPA objects displayed via the RPA object interface 70, the RPA system 10 may provide (or display) a list of user activities (e.g., an object click) applicable to the target RPA object. The user may then select a user activity (e.g., an object click) to be added to the RPA scenario from the list. However, the scope of this disclosure is not limited to this configuration. In some embodiments, the target RPA object may be the RPA object designated in step S31.

In step S34, the selected user activity may be automatically converted into an RPA activity sequence and may then be displayed. For example, the RPA system 10 may automatically transform the selected user activity into an RPA activity sequence and may display the RPA activity sequence on an RPA scenario design interface (e.g., a GUI that supports an RPA scenario design feature by arranging and connecting RPA activities). The RPA system 10 may then provide the RPA scenario design interface to the user. Further details on step S34 will be discussed later with reference to FIG. 11.

FIG. 11 is a detailed flowchart illustrating step S34, which involves transforming the selected user activity into an RPA activity sequence.

Referring to FIG. 11, in step S111, it may be determined whether it is necessary to transform the selected user activity into an RPA activity sequence. For example, the RPA system 10 may make this determination based on the object identification method designated by the user. This is because the correspondence between user activities and RPA activities may vary depending on the object identification method used (refer to FIG. 12 for further details).

Specifically, if the object identification method designated by the user is the first object identification method, which is applicable to Windows applications, the RPA system 10 may determine that it is unnecessary to transform the selected user activity into an RPA activity sequence because, in the first object identification method (or within a Windows application), user activities and RPA activities are generally the same.

Conversely, if the object identification method designated by the user is not the first object identification method, the RPA system 10 may determine that a transformation to an RPA activity sequence is necessary because, in other object identification methods (or applications), a single user activity is implemented through multiple RPA activities.

In step S112, the RPA system 10 may search for multiple RPA activity sequences that correspond to the selected user activity. For example, since the RPA activity sequence for implementing the selected user activity varies with the object identification method used, different RPA activity sequences may be defined in advance for the selected user activity for different object identification methods (refer to FIG. 12 for more details). For example, there may exist multiple RPA activity sequences that correspond to the selected user activity, including a first RPA activity sequence matching the first object identification method and a second RPA activity sequence matching the second object identification method. The selected user activity and the multiple RPA activity sequences corresponding to the selected user activity may be stored in an activity database. Then, the RPA system 10 may search the activity DB to retrieve the multiple RPA activity sequences corresponding to the selected user activity.

In step S113, among the multiple RPA activity sequences, an RPA activity sequence that matches the designated object identification method may be selected. For example, if the designated object identification method is the first object identification method, the RPA system 10 may choose an RPA activity sequence that matches the first object identification method from among the multiple RPA activity sequences.

In step S114, at least some of the attributes of RPA activities that constitute the selected RPA activity sequence may be automatically set. For example, the RPA system 10 may automatically set the attributes of the RPA activities based on a predefined default value, attribute information of the target RPA object collected during the object identification process, and information on the target device. In this manner, user convenience can be significantly enhanced. For further clarity and understanding, step S114 will hereinafter be described in further detail with reference to FIGS. 12 and 13.

FIG. 12 shows multiple RPA activity sequences corresponding to a user activity 121. Specifically, FIG. 12 illustrates a case where the user activity 121 is clicking a text object. The three object identification methods shown in FIG. 12 are the second object identification method, which is applicable to native applications, the fourth object identification method, which is based on OCR, and the third object identification method, which is applicable to Android mobile devices. Referring to FIG. 12, the RPA activity sequences for implementing the user activity 121 may vary depending on the object identification method used.

FIG. 13 illustrates an example of automatically setting attribute information for RPA activity sequences 131 through 133 that match the third object identification method.

Referring to FIG. 13, the RPA system 10 may automatically set attribute information 134 and 138 for RPA activity sequences 131 and 133 based on information on the target device. FIG. 13 illustrates a case where the attribute information 134 and 138 of the RPA activities 131 and 133 is set using network address information of the target device (i.e., assigning the network address of the target device as relevant attribute data).

Additionally, for example, the RPA system 10 may also automatically set attribute information 136 for an RPA activity 132 based on attribute information of the target RPA object. FIG. 13 illustrates a case where the attribute information 136 of the RPA activity 132 is set using bounds attribute information of the target RPA object.

Furthermore, for example, the RPA system 10 may automatically set attribute information 135 for an RPA activity 131 based on a predefined default value. FIG. 13 illustrates a case where the default value of the capture file path (or filename) attribute of the RPA activity 131 is defined as "ScreenShot.png."

Moreover, for example, the RPA system 10 may use the attribute information 135 of the RPA activity 131 to automatically set attribute information 137 for another RPA activity 132. FIG. 13 illustrates a case where the attribute information 137 of the RPA activity 132 is automatically configured from the attribute information 135 of the RPA activity 131, taking into account the relationship between the RPA activities 132 and 135.

The RPA scenario creation method according to some embodiments of the present disclosure has been described so far with reference to FIGS. 3 through 13. As discussed, the RPA objects within the target application can be automatically identified, and user activities (or events) selected by the user can be automatically transformed into an RPA activity sequence. Accordingly, the difficulty of creating (or writing) an RPA scenario can be significantly reduced, and user convenience can be greatly enhanced in connection with the creation of an RPA scenario. Furthermore, a reliable and accurate RPA scenario can be created quickly and easily.

Additionally, by searching for the parent object of a designated RPA object through an OS API, all the RPA objects within the target application and their hierarchical structures can be easily identified. Moreover, even invisible RPA objects (i.e., objects not visible in the screen area of the target application) can be accurately identified.

Also, the RPA objects identified within the target application can be displayed in the first area 71 of the RPA object interface 70, and a screenshot image of the target application can be displayed in the second area 72 of the RPA object interface 70. When an RPA object from a particular area is selected, a corresponding RPA object (or object area) from another area can be highlighted. In this case, the user can select an invisible RPA object via the first area 71 and quickly select a visible RPA object (e.g., a target RPA object) via the second area 72, thus further enhancing user convenience.

Additionally, attribute information for the RPA activities that constitute the RPA activity sequence can be automatically set based on the attribute information of the target RPA object, the default value, etc. Accordingly, the difficulty of creating an RPA scenario can be further reduced, and user convenience can be further enhanced in connection with the creation of an RPA scenario.

For reference, steps S31 and S32 may be performed by the RPA object identification module 21, step S33 may be performed by the RPA object interface provision module 22, and step S34 may be performed by the RPA scenario creation module 23.

An exemplary computing device that can implement the RPA system 10 will hereinafter be described with reference to FIG. 14.

FIG. 14 is an exemplary hardware configuration view of a computing device 140.

Referring to FIG. 14, the computing device 140 may include at least one processor 141, a bus 143, a communication interface 144, a memory 142, which loads a computer program 146 executed by the processor 141, and a storage 145, which stores the computer program 146. FIG. 14 illustrates only components related to the embodiments of the present disclosure, and it is obvious to one of ordinary skill in the art to which the present disclosure pertains that other general-purpose components than those illustrated in FIG. 14 may also be included in computing device 140. That is, the computing device 140 may further include various components (e.g., a display or various input/output devices such as a keyboard/mouse/speaker, etc.) other than those depicted in FIG. 14. In some embodiments, the computing device 140 may be configured without some of the components illustrated in FIG. 14. Each of the components of the computing device 140 will hereinafter be described.

The processor 141 may control the overall operations of the components of the computing device 140. The processor 141 may be configured to include at least one of a Central Processing Unit (CPU), a Micro Processor Unit (MPU), a Micro Controller Unit (MCU), a Graphics Processing Unit (GPU), and any other form of processor well-known in the field of the present disclosure. Moreover, the processor 141 may perform computations for at least one application or program to execute operations/methods according to some embodiments of the present disclosure. The computing device 140 may be equipped with one or more processors 231.

The memory 142 may store various data, commands, and/or information. The memory 142 may load the computer program 146 from the storage 145 to execute the operations/methods according to some embodiments of the present disclosure. The memory 142 may be implemented as a volatile memory such as a Random-Access Memory (RAM), but the present disclosure is not limited thereto.

The bus 143 may provide communication functions between the components of the computing device 140. The bus 143 may be implemented in various forms, such as an address bus, a data bus, or a control bus.

The communication interface 144 may support wired or wireless Internet communications for the computing device 140. Moreover, the communication interface 144 may support various other communication methods than the Internet communication method. For this, the communication interface 144 may be configured to include a well-known communication module in the field of the present disclosure.

The storage 145 can non-transiently store one or more computer programs 236. The storage 145 may be configured to include a non-volatile memory such as a Read-Only Memory (ROM), an Erasable Programmable ROM (EPROM), an Electrically Erasable Programmable ROM (EEPROM), a flash memory, a hard disk, a removable disk, or any form of computer-readable recording medium well known in the technical field of the present disclosure.

The computer program 146 may include instructions that, when loaded into the memory 142, cause the processor 141 to perform the operations/methods according to some embodiments of the present disclosure. That is, by executing the loaded instructions, the processor 141 may perform the operations/methods according to some embodiments of the present disclosure.

For example, the computer program 146 may include instructions for performing the operations of: receiving input from a user that designates a target application or an RPA object within the target application; identifying and displaying one or more RPA objects that belong to the target application; receiving input from the user that selects a target RPA object and a user activity associated with the target RPA object; and transforming the selected user activity into a corresponding RPA activity sequence and displaying the corresponding RPA activity sequence.

As another example, the computer program 146 may include instructions for performing at least some of the steps/operations described above with reference to FIGS. 1 through 13.

In this case, the RPA system 10 may be implemented via the computing device 140.

Meanwhile, in some embodiments, the computing device 140 of FIG. 14 may represent a virtual machine implemented based on cloud technology. For example, the computing device 140 may be a virtual machine operating on one or more physical servers included in a server farm. In this case, at least some of the processor 141, the memory 142, and the storage 145 may be implemented as virtual hardware, and the communication interface 144 may be implemented as a virtualized networking element, such as a virtual switch.

The computing device 140 that can implement the RPA system 10 has been described so far with reference to FIG. 14.

Embodiments of the present disclosure have been described above with reference to FIGS. 1 through 14, but it should be noted that the effects of the present disclosure are not limited to those described above, and other effects of the present disclosure should be apparent from the following description.

The technical features of the present disclosure described so far may be embodied as computer readable codes on a computer readable medium. The computer program recorded on the computer readable medium may be transmitted to other computing device via a network such as internet and installed in the other computing device, thereby being used in the other computing device.

Although operations are shown in a specific order in the drawings, it should not be understood that desired results may be obtained when the operations must be performed in the specific order or sequential order or when all of the operations must be performed. In certain situations, multitasking and parallel processing may be advantageous. In concluding the detailed description, those skilled in the art will appreciate that many variations and modifications may be made to the example embodiments without substantially departing from the principles of the present disclosure. Therefore, the disclosed example embodiments of the disclosure are used in a generic and descriptive sense only and not for purposes of limitation.

The protection scope of the present invention should be interpreted by the following claims, and all technical ideas within the equivalent range should be interpreted as being included in the scope of the technical ideas defined by the present disclosure.

## Claims

1. A method of creating a Robotic Process Automation (RPA) scenario, performed by at least one computing device, the method comprising:
receiving, from a user, an input for designating a target application or an RPA object within the target application;
identifying and displaying one or more RPA objects that belong to the target application;
receiving, from the user, an input for selecting a target RPA object and a user activity associated with the target RPA object; and
transforming the selected user activity into a corresponding RPA activity sequence and displaying the corresponding RPA activity sequence.

2. The method of claim 1, wherein the identified one or more RPA objects include one or more RPA objects that are not visible in a screen area of the target application.

3. The method of claim 1, wherein the identifying and displaying the one or more RPA objects, includes:
if an RPA object within the target application is designated, identifying the one or more RPA objects by searching for a parent object of the designated RPA object through an Operating System (OS) Application Programming Interface (API); and
displaying the identified one or more RPA objects in a tree view.

4. The method of claim 1, wherein
the identifying and displaying the one or more RPA objects, includes:
receiving input from the user that designates an object identification method;
if the designated object identification method is a first method, identifying the RPA objects that belong to the target application according to the first method; and
if the designated object identification method is a second method,
identifying the RPA objects that belong to the target application according to the second method, and
at least some of RPA object identification results according to the first method differ from RPA object identification results according to the second method.

5. The method of claim 1, wherein the identifying and displaying the one or more RPA objects, includes:
identifying a hierarchical structure of the one or more RPA objects; and
generating an identifier (ID) for each of the one or more RPA objects based on the hierarchical structure.

6. The method of claim 1, wherein the identifying and displaying the one or more RPA objects, includes:
generating a screenshot image of the target application; and
displaying the one or more RPA objects in a first area of an RPA object interface and displaying the screenshot image in a second area of the RPA object interface.

7. The method of claim 6, further comprising:
receiving input from the user that selects a particular RPA object in the first area;
determining an object area in the screenshot image where the particular RPA object is located, based on a bounds attribute of the particular RPA object; and
highlighting the determined object area in the screenshot image displayed in the second area.

8. The method of claim 6, further comprising:
receiving input from the user that selects a particular point within the screenshot image displayed in the second area;
creating a list of RPA objects whose object areas includes a location of the particular point, based on attribute information of the one or more RPA objects;
determining an RPA object with a smallest object area from the list of RPA objects; and
highlighting the determined RPA object in the first area.

9. The method of claim 1, wherein
the one or more RPA objects are identified according to an object identification method designated by the user, and
the transforming the selected user activity into the corresponding RPA activity sequence and displaying the corresponding RPA activity sequence, includes:
determining whether a transformation of the selected user activity into an RPA activity sequence is necessary based on the designated object identification method; and
transforming the selected user activity into the corresponding RPA activity sequence when the transformation of the selected user activity into an RPA activity sequence is determined to be necessary.

10. The method of claim 1, wherein
the one or more RPA objects are identified according to an object identification method designated by the user, and
the transforming the selected user activity into the corresponding RPA activity sequence and displaying the corresponding RPA activity sequence, includes:
searching for and acquiring an RPA activity sequence that matches the designated object identification method from multiple RPA activity sequences corresponding to the selected user activity, wherein the multiple RPA activity sequences are predefined for different object identification methods; and
transforming the selected user activity into the acquired RPA activity sequence.

11. The method of claim 1, wherein the transforming the selected user activity into the corresponding RPA activity sequence and displaying the corresponding RPA activity sequence, includes:
automatically setting attribute information of RPA activities constituting the RPA activity sequence using attribute information of the target RPA object, collected during the identification of the one or more RPA objects.

12. An apparatus for creating a Robotic Process Automation (RPA) scenario, the apparatus comprising:
at least one processor; and
a memory storing a computer program executed by the at least one processor,
wherein the computer program includes instructions for operations of:
receiving, from a user, an input for designating a target application or an RPA object within the target application;
identifying and displaying one or more RPA objects that belong to the target application;
receiving, from the user, an input for selecting a target RPA object and a user activity associated with the target RPA object; and
transforming the selected user activity into a corresponding RPA activity sequence and displaying the corresponding RPA activity sequence.

13. The apparatus of claim 12, wherein the identifying and displaying the one or more RPA objects, includes:
identifying a hierarchical structure of the one or more RPA objects; and
generating an identifier (ID) for each of the one or more RPA objects based on the hierarchical structure.

14. A non-transitory a computer-readable medium storing a computer program executable by at least one processor to execute:
receiving input from a user that designates a target application or an RPA object within the target application;
identifying and displaying one or more RPA objects that belong to the target application;
receiving input from the user that selects a target RPA object and a user activity associated with the target RPA object; and
transforming the selected user activity into a corresponding RPA activity sequence and displaying the corresponding RPA activity sequence.

15. The non-transitory a computer-readable medium of claim 14, wherein the identifying and displaying the one or more RPA objects, includes:
identifying a hierarchical structure of the one or more RPA objects; and
generating an identifier (ID) for each of the one or more RPA objects based on the hierarchical structure.
